# EUROPEAN PATENT APPLICATION

(11) **EP 3 208 723 A1**
(43) Date of publication of application: **23.08.2017**
(21) Application number: 15851402.6
(22) Date of filing: 22.07.2015
(51) Int. Cl.: G06F 15/177

(54) **USB WIRELESS NETWORK CARD CONFIGURATION METHOD, HOST, USB WIRELESS NETWORK CARD AND COMMUNICATION SYSTEM**

(30) Priority: 14.10.2014 CN 201410541971
(71) Applicant: ZTE Corporation, Shenzhen, Guangdong 518057 (CN)
(72) Inventor: LU, Cuiling, Shenzhen Guangdong 518057 (CN); QIAN, Ying, Shenzhen Guangdong 518057 (CN); DENG, Qingtian, Shenzhen Guangdong 518057 (CN); MA, Weiwei, Shenzhen Guangdong 518057 (CN)
(74) Representative: Mozzi, Matteo
(86) International application number: PCT/CN2015/084853
(87) International publication number: WO 2016/058427

(57) **Abstract**

Provided are Universal Serial Bus (USB) wireless network card configuration methods, a host, a USB wireless network card and a communication system. A host enters a configuration mode after connecting with a USB wireless network card, acquires, in the configuration mode, configured interface combination information including each function interface configured by a user, and then sends the configured interface combination information to the USB wireless network card. The USB wireless network card adaptively writes a corresponding configuration file according to each function interface included in the configured interface combination information so as to complete configuration. A user is enabled to configure different function interfaces according to the demands of the user, and the USB wireless network card can report various different interfaces according to the configuration of the user. By virtue of the technical solution, one USB wireless network card driver version can be compatible with all customization requirements of different users for interface functions, thereby avoiding the limitation on the number of endpoints raised by a USB protocol, and saving development costs and shortening research and development cycles. Taking the advantage of the technical solution, the user can freely switch among different function interfaces without post upgrade, thereby reducing the number of driver versions and upgrade frequencies, so that driver development and maintenance costs can be reduced.

## Description

### Technical Field

The present disclosure relates to the field of communications, and in particular to Universal Serial Bus (USB) wireless network card configuration methods, a host, a USB wireless network card and a communication system.

### Background

With the constant promotion of wireless network card technologies, besides a basic dial-up network access function, current wireless network cards have a variety of other functions, for example, Secure Digital Memory Card (SD) function, card reader function, voice function, Subscriber Identity Module (SIM) function, Global Positioning System (GPS) function and so on. Currently, all-in-one network cards are provided by adding other functions meeting new requirements of users into wireless network cards. However, different operators have different selections for user ports. For example, operator A probably requires Internet + Voice function, while operator B probably requires Internet + SD card reader function + GPS function. Moreover, current wireless network cards, after connecting with a host, can only report to the host function interfaces customized by the operator, and cannot adapt to the requirements of different operators or users for different function interfaces. In this condition, two different versions have to be provided for the two operators to meet their respective requirements. At present, there is a large number of operators, thus the number of customized versions is huge, causing a huge effort of development and maintenance. If the port requirement of an operator changes, the version provided to the operator needs to be changed accordingly and the equipment needs to upgrade the version to meet the requirement. The above technical solution has many problems, thus it has been considered to provide a large and complete version to include the requirements of all current operators for ports into this version, so as to provide a single version with different functions. However, USB equipment has a limitation on the number of supported endpoints, for example, full-speed and high-speed equipment supports a maximum number of 15 endpoints, excluding default endpoints. For example, if a function interface is composed of two endpoints (input and output), then 7 function interfaces can be supported at most, which makes it impossible to limitlessly add the equipment interface functions.

### Summary

Some embodiments of the present disclosure provide USB wireless network card configuration methods, a host, a USB wireless network card and a communication system, which may solve the problem that current wireless network cards can only report function interfaces customized by the operator and cannot adaptively meet the requirements of different user interfaces.

According to an embodiment of the present disclosure, a USB wireless network card configuration method is provided, which may include, for example, the following acts.

A host connects with a USB wireless network card to enter a configuration mode.

The host acquires, in the configuration mode, configured interface combination information. In this embodiment, the configured interface combination information may include each interface function configured.

The host sends the configured interface combination information to the USB wireless network card for configuration.

In an embodiment of the present disclosure, after the host sends the configured interface combination information to the USB wireless network card, the method may further include the following acts.

The host installs an application corresponding to the each interface function.

The host sends a switch instruction to the USB wireless network card.

The host receives an enumerated interface combination reported according to the switch instruction by the USB wireless network card, and switches to a corresponding interface to enter a normal working mode. In this embodiment, the enumerated interface combination may include information of each interface to be enumerated which is determined after the USB wireless network card performs configuration according to the configured interface combination information.

In an embodiment of the present disclosure, before the host sends the configured interface combination information to the USB wireless network card, the method may further include checking validity of the configured interface combination information.

In an embodiment of the present disclosure, the configured interface combination information acquired by the host may be provided by a host user or a preset configuration client.

An embodiment of the present disclosure provides a USB wireless network card configuration method, which may include, for example, the following acts.

A USB wireless network card connects with a host to enter a configuration mode.

The USB wireless network card receives, in a configuration mode, configured interface combination information sent by the host. In this embodiment, the configured interface combination information may include each interface function configured.

The USB wireless network card configures a configuration file corresponding to the each interface function.

In an embodiment of the present disclosure, the method may further include the following acts.

The USB wireless network card obtains a corresponding enumerated interface combination to be enumerated after completion of configuring the configuration file corresponding to the each interface function. In this embodiment, the enumerated interface combination may include information of each interface to be enumerated.

The USB wireless network card receives a switch instruction sent by the host.

The USB wireless network card reports the enumerated interface combination to the host.

In an embodiment of the present disclosure, the information of the interface may include identification information of the interface and identification information of an endpoint corresponding to the interface.

In an embodiment of the present disclosure, the USB wireless network card may store at least one configuration file of at least one interface function demanded by each operator.

An embodiment of the present disclosure provides a USB wireless network card configuration method, which may include, for example, the following acts.

A host connects with a USB wireless network card to enter a configuration mode.

The host receives, in the configuration mode, configured interface combination information. In this embodiment, the configured interface combination information may include each interface function configured.

The host sends the configured interface combination information to the USB wireless network card.

The USB wireless network card receives, in a configuration mode, the configured interface combination information sent by the host.

The USB wireless network card configures a configuration file corresponding to the each interface function.

An embodiment of the present disclosure provides a host, which may include a first communication connection module, a configuration acquisition module and a configuration processing module.

The first communication connection module is arranged to connect with a USB wireless network card to enter a configuration mode.

The configuration acquisition module is arranged to acquire, in the configuration mode, configured interface combination information. In this embodiment, the configured interface combination information may include each interface function configured.

The configuration processing module is arranged to send the configured interface combination information to the USB wireless network card for configuration.

In an embodiment of the present disclosure, the host may further include an installation module, a switch instruction sending module and a switch processing module.

The installation module is arranged to install an application corresponding to the each interface function after the configuration processing module sends the configured interface combination information to the USB wireless network card.

The switch instruction sending module is arranged to send a switch instruction to the USB wireless network card after the installation module completes installation.

The switch processing module is arranged to receive an enumerated interface combination reported according to the switch instruction by the USB wireless network card, and switch to a corresponding interface to enter a normal working mode. In the embodiment, the enumerated interface combination may include information of each interface to be enumerated which is determined after the USB wireless network card performs configuration according to the configured interface combination information.

An embodiment of the present disclosure provides a USB wireless network card, which may include a second communication connection module, a configuration receiving module and a configuration module.

The second communication connection module is arranged to connect with a host to enter a configuration mode.

The configuration receiving module is arranged to receive, in the configuration mode, configured interface combination information sent by the host. In this embodiment, the configured interface combination information may include each interface function configured.

The configuration module is arranged to configure a configuration file corresponding to the each interface function.

In an embodiment of the present disclosure, the USB wireless network card may further include a configuration reading module, a switch instruction receiving module and a reporting module.

The configuration reading module is arranged to read the configuration file corresponding to the each interface function configured by the configuration module to obtain a corresponding enumerated interface combination to be enumerated. In this embodiment, the enumerated interface combination may include information of each interface to be enumerated.

The switch instruction receiving module is arranged to receive a switch instruction sent by the host.

The reporting module is arranged to report the enumerated interface combination to the host after the switch instruction receiving module receives the switch instruction.

An embodiment of the present disclosure provides a communication system, which may include a host and a USB wireless network card.

The host is arranged to connect with the USB wireless network card to enter a configuration mode and acquire, in the configuration mode, configured interface combination information. In this embodiment, the configured interface combination information may include each interface function configured. The host is also arranged to send the configured interface combination information to the USB wireless network card.

The USB wireless network card is arranged to receive, in the configuration mode, the configured interface combination information sent by the host, and configure a configuration file corresponding to the each interface function.

It may be appreciated that the embodiments of the present disclosure have benefits as follows.

In the USB wireless network card configuration methods, the host, the USB wireless network card and the communication system provided by the embodiments of the present disclosure, a host enters a configuration mode after connecting with a USB wireless network card, acquires, in the configuration mode, configured interface combination information including each function interface configured by a user, and then sends the configured interface combination information to the USB wireless network card. The USB wireless network card adaptively writes a corresponding configuration file according to each function interface included in the configured interface combination information so as to complete configuration. Through the technical solution provided by the embodiments of the present disclosure, a user (may include operator user and/or common user) is enabled to configure different function interfaces according to the demands of the user, and the USB wireless network card can report various different interfaces according to the configuration of the user. By virtue of the technical solution, one USB wireless network card driver version can be compatible with all customization requirements of different operators or users for interface functions, thereby avoiding the limitation on the number of endpoints raised by a USB protocol, and saving development costs and shortening research and development cycles. Taking the advantage of the technical solution, operators and terminal users can freely switch among different function interfaces without post upgrade, thereby reducing the number of driver versions and upgrade frequencies, so that driver development and maintenance costs can be reduced.

### Brief Description of the Drawings

Fig. 1 is a flowchart of interface function configuration in USB wireless network card configuration in a first embodiment of the present disclosure;
Fig. 2 is a flowchart of mode switch in USB wireless network card configuration in a first embodiment of the present disclosure;
Fig. 3 is a composition schematic diagram of a communication system in a second embodiment of the present disclosure;
Fig. 4 is a structure diagram of a first host in a second embodiment of the present disclosure;
Fig. 5 is a structure diagram of a second host in a second embodiment of the present disclosure;
Fig. 6 is a structure diagram of a third host in a second embodiment of the present disclosure;
Fig. 7 is a structure diagram of a first USB wireless network card in a second embodiment of the present disclosure;
Fig. 8 is a structure diagram of a second USB wireless network card in a second embodiment of the present disclosure;
Fig. 9 is a flowchart of USB wireless network card configuration in a third embodiment of the present disclosure;
Fig. 10 is a diagram of an interface of a classic mode in a third embodiment of the present disclosure; and
Fig. 11 is a diagram of an interface of a free-combination mode in a third embodiment of the present disclosure.

### Detailed Description of the Embodiments

The present disclosure is described below in further detail through specific embodiments in conjunction with accompanying drawings.

### First embodiment

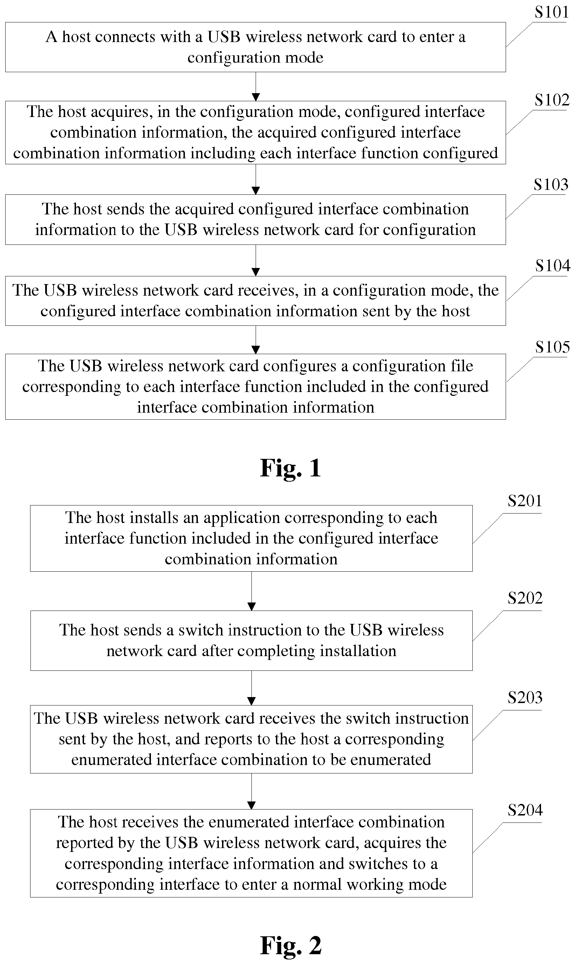

As shown in Fig. 1, a USB wireless network card configuration method provided by this embodiment may include the following acts.

At act 101, a host connects with a USB wireless network card to enter a configuration mode. In this embodiment, the configuration mode refers to that the USB wireless network card is present on the host in the form of, for example, virtual compact disc.

At act 102, the host acquires, in the configuration mode, configured interface combination information. The acquired configured interface combination information may include each interface function configured. In this embodiment, the configured interface combination information may be a combination of each interface function configured by a user (including, for example, operator user and/or common user) according to requirements thereof and then input on the host, and may alternatively be a combination of each interface function automatically configured by a preset configuration client according to a preset rule. In this embodiment, the configured interface combination information may include the identification information of each interface function configured. After the host receives the interface combination information, the host may save the interface combination information so that the interface combination information can be used in subsequent interface switch.

At act 103, the host sends the acquired configured interface combination information to the USB wireless network card for configuration.

At act 104, the USB wireless network card receives, in a configuration mode, the configured interface combination information sent by the host.

At act 105, the USB wireless network card configures a configuration file corresponding to the each interface function included in the configured interface combination information. That is, the USB wireless network card may write the corresponding configuration file to complete the configuration of interface function.

It may be appreciated that the technical solution provided by this embodiment allows an operator or common user to configure a function interface according to requirements thereof, and the USB wireless network card can adapt to different combinations of interfaces configured by different users. As an exemplary implementation, the USB wireless network card in this embodiment may have pre-stored at least one configuration file of at least one interface function demanded by each operator. For example, the USB wireless network card may have pre-stored configuration files corresponding to all interface functions.

Before act 103, before the host sends the acquired configured interface combination information to the USB wireless network card for configuration, the method may further include checking validity of the configured interface combination information. The configured interface combination information may be sent to the USB wireless network card only after the configured interface combination information is checked to be valid, otherwise, return to act 102 to perform reconfiguration. Here, the validity checking may include but not limited to: judging whether the number of configured interface functions is greater than a maximum value (it may be judged by determining the number of endpoints to be occupied, e.g., judging whether the number of endpoints to be occupied is greater than, for example, 15), and/or judging whether the configuration for the interface function is valid, for example, judging whether a Compact Disc Read-Only Memory (CDROM) is not selected when configuring an Engine Control Module (ECM) interface (non-windows driver-free working mode needs to be matched with the CDROM for use). If it is judged that the number of configured interface functions is greater than a maximum value or the configuration for the interface function is valid, then it may be judged that the configured interface combination information is invalid.

The process shown in Fig. 1 is a process of the USB wireless network card adaptively configuring each interface function. After completing the above act 105, the USB wireless network card obtains a corresponding enumerated interface combination to be enumerated after completion of configuring the configuration file corresponding to the each interface function. The enumerated interface combination may include information of each interface to be enumerated. The information of the interface may include but not limited to identification information of the interface and identification information of an endpoint corresponding to the interface. The identification information of the interface in this embodiment may be a descriptor of the interface. The identification information of the endpoint may be the identification information of the interface. After the above act 105, the wireless network card configuration may further include a mode switch process of, for example, switching from the configuration mode to a normal working mode. As an exemplary implementation, after the above act 105, for example, after the USB wireless network card completes the configuration for each interface function, the USB wireless network card feeds back a configuration success response message to the host. If the USB wireless network card fails to complete the configuration for at least one interface function, the USB wireless network card feeds back a configuration failure response message to the host. The host may start the mode switch process only after receiving the configuration success response message fed back by the USB wireless network card. As an alternative, according to an agreement, the host may directly start the mode switch mode independently when an appointed time expires. The mode switch process may refer to Fig. 2, which may include the following acts.

At act 201, the host installs an application corresponding to the each interface function included in the configured interface combination information. As an exemplary implementation, each function interface may be identified through the identification information of each interface function.

At act 202, the host sends a switch instruction to the USB wireless network card after completing installation.

At act 203, the USB wireless network card receives the switch instruction sent by the host, and reports a corresponding enumerated interface combination to be enumerated to the host, that is, reporting the configured corresponding interface information to the host.

At act 204, the host receives the enumerated interface combination reported by the USB wireless network card, acquires the corresponding interface information and switches to a corresponding interface to enter a normal working mode. After entering the working mode, each application installed on the host can work with a corresponding interface.

In this embodiment, when a user needs to reconfigure an interface function, the user may directly unload the application installed on the host, and then pull and plug the USB wireless network card again to perform reinstallation. As an alternative, an initialization function may be set under the configuration mode, the user may directly use the initialization function to clear the previous configuration and the corresponding application installed, and then the user may enter the configuration interface again to perform configuration. In this embodiment, the configuration interface on the host presented to the user may be set according to different application scenarios. As an exemplary implementation, the interface function to be configured may be displayed on the configuration interface by way of several suggested combinations to avoid users, especially common users, to have an error in configuration; or, each configuration principle by which the user needs to abide is displayed on the configuration interface, etc.

### Second embodiment

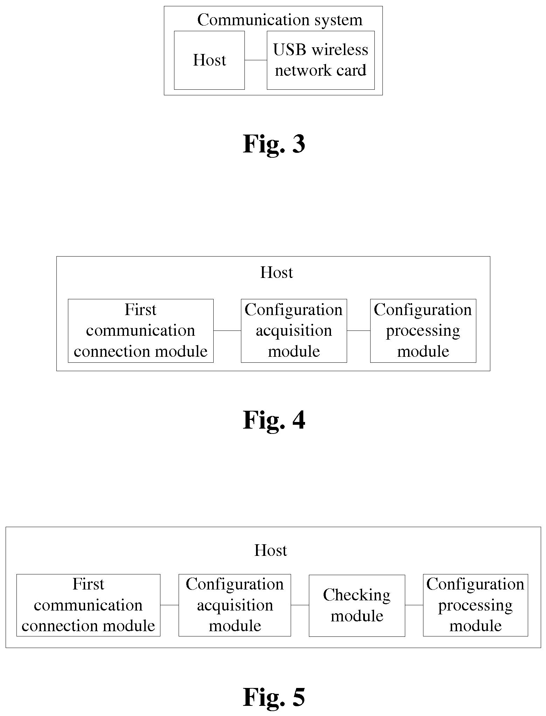

As shown in Fig. 3, this embodiment provides a communication system, including a host and a USB wireless network card.

The host is arranged to connect with the USB wireless network card to enter a configuration mode and acquire, in the configuration mode, configured interface combination information. The configured interface combination information may include each interface function configured. The host is also arranged to send the configured interface combination information to the USB wireless network card.

The USB wireless network card is arranged to receive, in a configuration mode, the configured interface combination information sent by the host, and configure a configuration file corresponding to the each interface function.

Before the host sends the acquired configured interface combination information to the USB wireless network card for configuration, the communication system is further arranged to check validity of the configured interface combination information. The configured interface combination information is sent to the USB wireless network card only after the configured interface combination information is checked to be valid. Here, the validity checking may include but not limited to: judging whether the number of configured interface functions is greater than a maximum value (it may be judged by determining the number of endpoints to be occupied, e.g., judging whether the number of endpoints to be occupied is greater than, for example, 15), and/or judging whether the configuration for the interface function is valid, for example, judging whether a CDROM is not selected when configuring an ECM interface (non-windows driver-free working mode needs to be matched with the CDROM for use)). If it is judged that the number of configured interface functions is greater than a maximum value or the configuration for the interface function is valid, then it may be judged that the configured interface combination information is invalid.

The USB wireless network card may be arranged to obtain a corresponding enumerated interface combination to be enumerated after completion of configuring the configuration file corresponding to the each interface function. The enumerated interface combination may include information of each interface to be enumerated. The information of the interface may include but not limited to identification information of the interface and identification information of an endpoint corresponding to the interface. The identification information of the interface in this embodiment may be a descriptor of the interface. The identification information of the endpoint may be the identification information of the interface. After the USB wireless network card completes the configuration for each interface function, the USB wireless network card feeds back a configuration success response message to the host. If the USB wireless network card fails to complete the configuration for at least one interface function, the USB wireless network card feeds back a configuration failure response message to the host. The host may start the mode switch process only after receiving the configuration success response message fed back by the USB wireless network card. As an alternative, according to an agreement, the host may directly start the mode switch mode independently when an appointed time expires. As an exemplary implementation, the host is further arranged to install an application corresponding to the each interface function included in the configured interface combination information. Each function interface may be identified through the identification information of each interface function. The host may send a switch instruction to the USB wireless network card after completing installation, the USB wireless network card receives the switch instruction sent by the host, and reports a corresponding enumerated interface combination to be enumerated to the host, that is, reporting the configured corresponding interface information to the host. After receiving the enumerated interface combination reported by the USB wireless network card, the host acquires the corresponding interface information and switches to a corresponding interface to enter a normal working mode. After entering the working mode, each application installed on the host can work with a corresponding interface.

As an exemplary implementation, as shown in Fig. 4, the host in this embodiment may include a first communication connection module, a configuration acquisition module and a configuration processing module.

The first communication connection module is arranged to connect with a USB wireless network card to enter a configuration mode.

The configuration acquisition module is arranged to acquire, in the configuration mode, configured interface combination information, the configured interface combination information may include each interface function configured. As an exemplary implementation, the configuration acquisition module may provide a corresponding configuration interface for a user to configure interface functions.

The configuration processing module is arranged to send the configured interface combination information to the USB wireless network card for configuration.

As shown in Fig. 5, the host in this embodiment may further include a checking module, which is arranged to check validity of the configured interface combination information before the configuration processing module sends the configured interface combination information to the USB wireless network card.

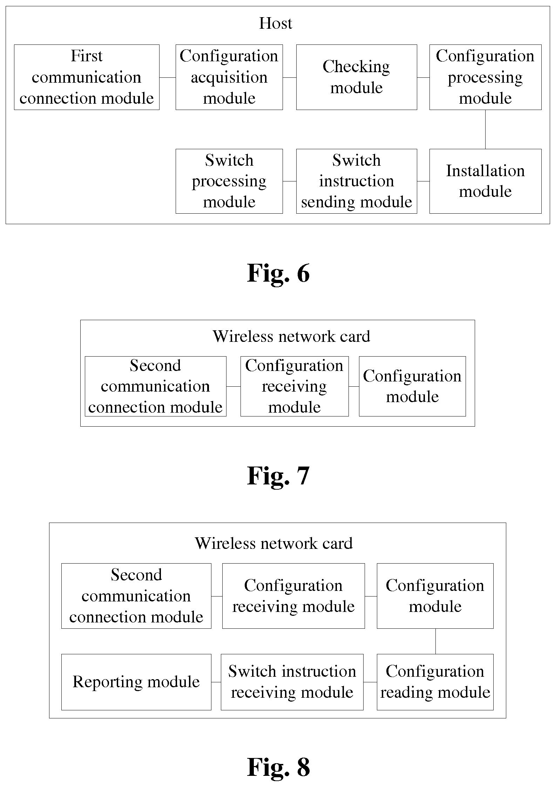

As shown in Fig. 6, the host in this embodiment may further include an installation module, a switch instruction sending module and a switch processing module.

The installation module is arranged to install an application corresponding to the each interface function after the configuration processing module sends the configured interface combination information to the USB wireless network card.

The switch instruction sending module is arranged to send a switch instruction to the USB wireless network card after the installation module completes installation.

The switch processing module is arranged to receive an enumerated interface combination reported according to the switch instruction by the USB wireless network card, and switch to a corresponding interface to enter a normal working mode.

As shown in Fig. 7, the USB wireless network card in this embodiment may include a second communication connection module, a configuration receiving module and a configuration module.

The second communication connection module is arranged to connect with a host to enter a configuration mode.

The configuration receiving module is arranged to receive, in the configuration mode, configured interface combination information sent by the host.

The configuration module is arranged to configure a configuration file corresponding to the each interface function, that is, write the configuration file corresponding to the each interface function.

As shown in Fig. 8, the USB wireless network card may further include a configuration reading module, a switch instruction receiving module and a reporting module.

The configuration reading module is arranged to read the configuration file corresponding to the each interface function configured by the configuration module to obtain a corresponding enumerated interface combination to be enumerated. The enumerated interface combination may include information of each interface to be enumerated. As an exemplary implementation, the enumerated interface combination may include a descriptor of each interface and a descriptor of a corresponding endpoint.

The switch instruction receiving module is arranged to receive a switch instruction sent by the host.

The reporting module is arranged to report the enumerated interface combination to the host after the switch instruction receiving module receives the switch instruction.

It should be understood that at least one of the configuration acquisition module, the configuration processing module, the checking module, the installation module, the switch instruction sending module and the switch processing module on the host in this embodiment may be realized through software. This software may be pre-stored in the USB wireless network card. When the USB wireless network card is inserted into the host, a corresponding program is installed on the host. Moreover, the configuration process of the interface function may present different configuration interfaces during the installation process of the program to complete configuration.

### Third embodiment

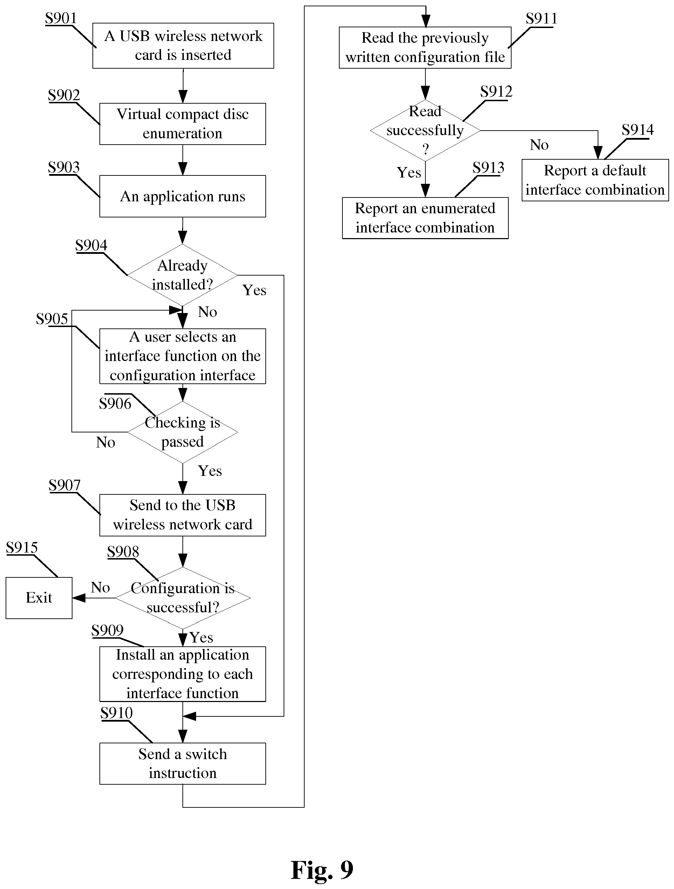

This embodiment illustrates a complete USB wireless network card configuration process. As shown in Fig. 9, the process may include the following acts.

At act 901, a USB wireless network card is inserted into a Personal Computer (PC).

At act 902, the USB wireless network card enters a configuration mode by way of virtual compact disc equipment enumeration. The virtual compact disc has stored herein one or more user applications, which may include a program for realizing at least one of the configuration acquisition module, the configuration processing module, the checking module, the installation module, the switch instruction sending module and the switch processing module on the host.

At act 903, the user application in the virtual compact disc is double clicked, and then user installing program is started.

At act 904, the host judges whether the user application has been installed, that is, whether the user application has been configured. If the user application has been installed, the flow proceeds to act 910; otherwise, the flow proceeds to act 905.

At act 905, a user configuration interface is displayed on the host, and the user selects a needed interface function on the configuration interface.

At act 906, the host checks the interface function configured by the user, and verifies the validity of the interface combination selected by the user. If the checking is passed, the flow proceeds to act 907; otherwise, return to act 905 again to select.

At act 907, the host sets the configuration of the corresponding interface function and sends the configured interface combination information to the USB wireless network card side through a self-defined instruction. The USB wireless network card responds to the instruction and writes a configuration file corresponding to each interface function configured by the user. After the configuration is successful, the USB wireless network card feeds back a configuration success response message to the host.

At act 908, the host judges whether the configuration is successful according to whether the configuration success response message is received. If the configuration is successful, the flow proceeds to act 909; otherwise, the flow proceeds to act 915.

At act 909, the host installs an application corresponding to the each interface function.

At act 910, the host sends a switch instruction to the USB wireless network card.

At act 911, the USB wireless network card reads the previously written configuration file to determine an enumerated interface combination to be enumerated.

At act 912, the USB wireless network card judges whether the reading is successful. If the reading is not successful, it represents that an error occurs, the flow proceeds to act 914; otherwise, the flow proceeds to act 913.

At act 913, the USB wireless network card reports the enumerated interface combination to the host to complete switch.

At act 914, the USB wireless network card reports a default interface combination to complete switch.

At act 915, exit the process.

If the user wants to use other interface functions, he/she only needs to uninstall the application installed on the host, and then pull and plug the network card again to select a new interface function on the application installation interface.

If the operator still wants to provide a customized interface combination function for the users, this may be realized through a preset configuration client. This configuration client may be acquired through network. After the device is inserted, it is only needed to run this configuration client to set the device according to the preferable interface combination according to the configuration of the operator, and then click save. In this way, it is not necessary for a common user to perform configuration manually, thereby avoiding configuration error.

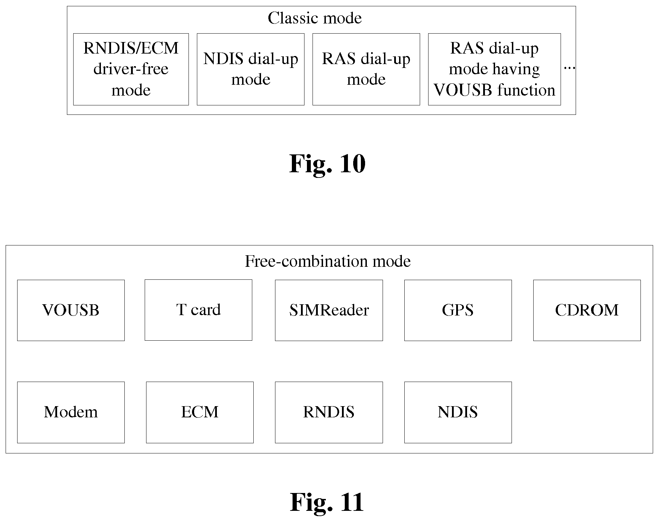

In this embodiment, the user configuration interface realized on the host may include two modes, i.e., a classic mode and a free-combination mode. The interface of the classic mode is shown on Fig. 10. As shown in Fig. 10, this interface may have a Remote Network Driver Interface Specification/Engine Control Module (RNDIS/ECM) driver-free mode, a Remote Network Driver Interface Specification (NDIS) dial-up mode, a Remote Access Service (RAS) dial-up mode, an RAS dial-up mode having Voice Over Universal Serial Bus (VOUSB) function, a single-T card (TransFlash card, also referred to as TF card) mode, etc. The interface of the free-combination mode is shown in Fig. 11. The free-combination mode enables deep customization, and serial ports (for example, VOUSB, SIMReader, GPS, etc.), network cards (for example, NDIS, RNDIS, ECM, RAS, etc.) and large-capacity storage devices (for example, T card) may be freely combined.

Thus, the technical solution provided by the embodiments of the present disclosure realizes the effect that one USB wireless network card driver satisfies various interface customization requirements. A user may freely select the needed interface function. Meanwhile, through slight secondary configuration by the application, the driver interface mode at the USB network card can be fixed. Under this condition, the user can only use one interface combination function. Taking the advantage of the technical solution provided by the embodiment, the diversification requirement of users is satisfied, and one version has a plurality of customizations, thereby avoiding multiple times of customization, modification and test of the version and greatly reducing the research and development cycles and maintenance costs.

Industrial Applicability: through the above description it may be appreciated that the technical solution provided by the embodiments of the present disclosure can configure different function interfaces according to the demands of users, and the USB wireless network card can report various different interfaces according to the configuration of the user. By virtue of the technical solution, one USB wireless network card driver version can be compatible with all customization requirements of different operators or users for interface functions, thereby avoiding the limitation on the number of endpoints raised by a USB protocol, and saving development costs and shortening research and development cycles. The operator or user can freely switch among different function interfaces without post upgrade, thereby reducing the number of driver versions and upgrade frequencies, so that driver development and maintenance costs can be reduced.

The above is a further detailed description made for the present disclosure in conjunction with specific embodiments. It may be appreciated that the specific embodiments of the present disclosure should not be limited to the above description. For those skilled in the art to which the present disclosure belongs, a plurality of simple deductions or substitutions may be made without departing from the principle of the present disclosure and these deductions or substitutions are intended to fall within the scope of protection defined by the appended claims of the present disclosure.

## Claims

1. A Universal Serial Bus, USB, wireless network card configuration method, comprising:
connecting with a USB wireless network card, by a host, to enter a configuration mode;
acquiring in the configuration mode, by the host, configured interface combination information, wherein the configured interface combination information comprises each interface function configured; and
sending, by the host, the configured interface combination information to the USB wireless network card for configuration.

2. The USB wireless network card configuration method as claimed in claim 1, wherein after sending, by the host, the configured interface combination information to the USB wireless network card, the method further comprises:
installing, by the host, an application corresponding to the each interface function;
sending, by the host, a switch instruction to the USB wireless network card;
receiving, by the host, an enumerated interface combination reported according to the switch instruction by the USB wireless network card, and switching, by the host, to a corresponding interface to enter a normal working mode, wherein the enumerated interface combination comprises information of each interface to be enumerated which is determined after the USB wireless network card performs configuration according to the configured interface combination information.

3. The USB wireless network card configuration method as claimed in claim 1 or 2, wherein before sending, by the host, the configured interface combination information to the USB wireless network card, the method further comprises checking validity of the configured interface combination information.

4. The USB wireless network card configuration method as claimed in claim 1 or 2, wherein the configured interface combination information acquired by the host is provided by a host user or a preset configuration client.

5. A Universal Serial Bus, USB, wireless network card configuration method, comprising:
connecting with a host, by a USB wireless network card, to enter a configuration mode;
receiving in a configuration mode, by the USB wireless network card, configured interface combination information sent by the host, wherein the configured interface combination information comprises each interface function configured; and
configuring, by the USB wireless network card, a configuration file corresponding to the each interface function.

6. The USB wireless network card configuration method as claimed in claim 5, further comprising:
obtaining, by the USB wireless network card, a corresponding enumerated interface combination to be enumerated after completion of configuring the configuration file corresponding to the each interface function, wherein the enumerated interface combination comprises information of each interface to be enumerated;
receiving, by the USB wireless network card, a switch instruction sent by the host; and
reporting, by the USB wireless network card, the enumerated interface combination to the host.

7. The USB wireless network card configuration method as claimed in claim 6, wherein the information of the interface comprises identification information of the interface and identification information of an endpoint corresponding to the interface.

8. The USB wireless network card configuration method as claimed in any one of claims 5 to 7, wherein the USB wireless network card stores at least one configuration file of at least one interface function demanded by each operator.

9. A Universal Serial Bus, USB, wireless network card configuration method, comprising:
connecting with a USB wireless network card, by a host, to enter a configuration mode;
receiving in the configuration mode, by the host, configured interface combination information, wherein the configured interface combination information comprises each interface function configured; and
sending, by the host, the configured interface combination information to the USB wireless network card;
receiving in a configuration mode, by the USB wireless network card, the configured interface combination information sent by the host; and
configuring, by the USB wireless network card, a configuration file corresponding to the each interface function.

10. A host, comprising a first communication connection module, a configuration acquisition module and a configuration processing module, wherein
the first communication connection module is arranged to connect with a Universal Serial Bus, USB, wireless network card to enter a configuration mode;
the configuration acquisition module is arranged to acquire, in the configuration mode, configured interface combination information, wherein the configured interface combination information comprises each interface function configured; and
the configuration processing module is arranged to send the configured interface combination information to the USB wireless network card for configuration.

11. The host as claimed in claim 10, further comprising an installation module, a switch instruction sending module and a switch processing module, wherein
the installation module is arranged to install an application corresponding to the each interface function after the configuration processing module sends the configured interface combination information to the USB wireless network card;
the switch instruction sending module is arranged to send a switch instruction to the USB wireless network card after the installation module completes installation; and
the switch processing module is arranged to receive an enumerated interface combination reported according to the switch instruction by the USB wireless network card, and switch to a corresponding interface to enter a normal working mode, wherein the enumerated interface combination comprises information of each interface to be enumerated which is determined after the USB wireless network card performs configuration according to the configured interface combination information.

12. A Universal Serial Bus, USB, wireless network card, comprising a second communication connection module, a configuration receiving module and a configuration module, wherein
the second communication connection module is arranged to connect with a host to enter a configuration mode;
the configuration receiving module is arranged to receive, in the configuration mode, configured interface combination information sent by the host, wherein the configured interface combination information comprises each interface function configured; and
the configuration module is arranged to configure a configuration file corresponding to the each interface function.

13. The USB wireless network card as claimed in claim 12, further comprising a configuration reading module, a switch instruction receiving module and a reporting module, wherein
the configuration reading module is arranged to read the configuration file corresponding to the each interface function configured by the configuration module to obtain a corresponding enumerated interface combination to be enumerated, wherein the enumerated interface combination comprises information of each interface to be enumerated;
the switch instruction receiving module is arranged to receive a switch instruction sent by the host; and
the reporting module is arranged to report the enumerated interface combination to the host after the switch instruction receiving module receives the switch instruction.

14. A communication system, comprising a host and a Universal Serial Bus, USB, wireless network card, wherein
the host is arranged to connect with the USB wireless network card to enter a configuration mode and acquire, in the configuration mode, configured interface combination information, wherein the configured interface combination information comprises each interface function configured; and the host is also arranged to send the configured interface combination information to the USB wireless network card; and
the USB wireless network card is arranged to receive, in the configuration mode, the configured interface combination information sent by the host, and configure a configuration file corresponding to the each interface function.
